# EUROPEAN PATENT SPECIFICATION

(11) **EP 2 298 633 B1**
(45) Date of publication and mention of the grant of the patent: **25.02.2015**
(21) Application number: 10176577.4
(22) Date of filing: 14.09.2010
(51) Int. Cl.: B62J 17/02, B62J 6/00

(54) **Motorcycle**
Motorrad
Motocyclette

(30) Priority: 16.09.2009 JP 2009214728
(43) Date of publication of application: 23.03.2011
(73) Proprietor: Honda Motor Co., Ltd., Tokyo 107-8556 (JP)
(72) Inventor: Inose, Koji, Saitama 351-0193 (JP); Hasegawa, Masakazu, Saitama 351-0193 (JP)
(74) Representative: Beder, Jens

(56) References cited:
- EP-A2- 1 794 046
- DE-A1-102006 042 035
- FR-A1- 2 775 248
- JP-A- 2007 008 276
- US-A- 4 632 206
- US-A1- 2006 048 991
- US-A1- 2006 087 144
- US-A1- 2007 025 114

## Description

The present invention relates to improvement in a motorcycle in which turn signal lights are attached to a front cowl.

A motorcycle in which a pair of right and left turn signal lights are attached to a front cowl covering a front portion of the vehicle is known (refer to, for example, Patent Literature 1 (Figs. 2 and 5)).

In Fig. 2 of JP-A No. 2008-81082, to a front cowl (20) (numerals in parenthesis indicate the numerals in JP-A No. 2008-81082, also in the following) covering a front portion of a vehicle, a head light unit (21) and turn signal lights (30R and 30L) are attached. The turn signal lights (30R and 30L) are disposed in sides in a lower part of the head light unit (21).

In Figs. 2 and 5 of JP-A No. 2008-81082, the front cowl (20) has a stereoscopic shape including an uneven part. In such a front cowl (20), right and left turn signal lights (30R, 30L) are disposed so as to project to sides of the vehicle. A part of travel wind which hits the front cowl (20) is guided by the right and left turn signal lights (30R, 30L) to the rear side of the vehicle.

In the technique of Patent Literature 1, however, the right and left turn signal lights (30R, 30L) are provided so as to project to the sides of the vehicle along the entire border with the front cowl (20). Consequently, the outer face of the front cowl (20) becomes more uneven as a whole. When the outer face of the front cowl (20) becomes more uneven, features in design around the front cowl becomes unorganized, and there is room for improvement in the appearance around the front cowl.

A motorcycle, in which all features of the preamble of claim 1 are disclosed, is described in EP 1 794 046 B.

An object of the present invention is to provide a motorcycle capable of giving an organized impression on the appearance around a front cowl while maintaining excellent maneuverability.

This object is achieved by a motorcycle according to the enclosed independent claim 1. Advantageous features of the present invention are defined in the corresponding subclaims.

An invention of claim 1 relates to a motorcycle whose front part is covered with a front cowl including a front upper cowl and a front lower cowl, a pair of right and left turn signal lights being attached to the front cowl and the right and left turn signal lights being disposed between the front upper cowl and the front lower cowl when the vehicle is viewed from the front. Projections projected forward of the vehicle are provided for the turn signal lights in upper joints in which the front upper cowl and the turn signal lights are connected, the front upper cowl is joined to the projections; and the front upper cowl has a lower rim, an upper rim and two side rims at the upper joints. The turn signal lights and the front lower cowl are joined so as to form an almost continuous plane in lower joints in which the front lower cowl and the turn signal lights are connected; and the projections extend from a lower rim to an upper rim (64) of the front upper cowl.

In an invention of claim 2, the turn signal lights have projections projected from the upper joints to the front of the vehicle, side faces exposed in the lower joints, and front faces curved from the upper ends of the projections to the upper ends of the side faces, and the projection is formed so that a first virtual line connecting a curve top projected to the front face and the upper end of the projection is apart from the front upper cowl, and a second virtual line connecting the curve top and the upper end of the side face is in contact with or crosses the front lower cowl.

In an invention of claim 3, the projections extend linearly in a vehicle height direction along the upper joints.

In an invention of claim 4, inclined faces inclined to the outside in the vehicle width direction with distance from the upper joints are provided for the projections.

In an invention of claim 5, the right and left upper joints are disposed in an almost V shape when the vehicle is viewed from the front.

In an invention of claim 6, , a duct for taking travel wind is provided for the lower rim of the front upper cowl, and wind discharging ports for discharging the taken travel wind are provided for an upper end of a leg shield covering a rear part of the front cowl.

In an invention of claim 7, a regulation plate attached to the front cowl and closing the duct is provided on the inside of the duct, and the regulation plate has a vent hole permitting passage of the travel wind taken in the duct.

In the invention of claim 1, in upper joints in which the front upper cowl and the turn signal lights are connected, projections projected forward of the vehicle are provided for the turn signal lights. Further, in lower joints in which the front lower cowl and the turn signal lights are connected, the turn signal lights and the front lower cowl are almost continuous. Since the turn signal light has a configuration that only a part of the joint with the front cowl projects, the appearance around the front cowl can easily give an organized impression, and the appearance around the front cowl can be increased.

In addition, the turn signal lights have the projections projected to the front of the vehicle. In the case where the projections extend in the longitudinal direction of the vehicle, at the time of straight-ahead travel, the travel wind is guided upward of the vehicle, and the flows are aligned. When the travel wind is guided so as to travel upward of the vehicle and the flows are aligned, the force of pressing the front cowl downward by the travel wind is generated. Thus, floating of the front cowl is suppressed, and the road holding of the vehicle can be increased.

At the time of a turn, the travel wind is dispersed by the projections, and travel of the travel wind from the sides of the vehicle to the rear side of the front cowl is suppressed, so that the turning performance of the vehicle can be improved.

The projections extend from the lower end to the upper end of the front upper cowl. Therefore, the projections are formed in a wide range in the height direction of the vehicle, and the flow aligning effect can be further increased.Therefore, according to the present invention, a motorcycle capable of giving an organized impression on appearance around the front cowl while maintaining excellent maneuverability is provided.

In the invention of claim 2, the projection is formed so that the first virtual line connecting a curve top projected to the front face and the upper end of the projection is apart from the front upper cowl, sufficient projection height for guiding the travel wind and aligning the flow can be assured. When the sufficient projection height is assured, the operation of suppressing floating of the front cowl by the travel wind at the time of straight-ahead travel can be increased.

In addition, the second virtual line connecting the curve top and the upper end of the side face is formed so as to be in contact with or so as to cross the front lower cowl. With such side face, the turn signal light is not projected from the front lower cowl.

Since only one side of the turn signal light is projected from the front cowl, an organized impression can be given on the appearance around the front cowl, and the appearance around the front cowl can be increased.

In the invention of claim 3, the projections extend linearly in the vehicle height direction along the upper joints. Consequently, at the time of straight-ahead travel, the travel wind is easily guided above the vehicle. When the travel wind is guided above the vehicle, floating of the front cowl is suppressed by the travel wind. Therefore, the road holding of the vehicle can be increased.

At the time of the turn, the travel wind is dispersed by the projection linearly provided in the height direction of the turn signal light, and travel of the travel wind from the sides of the vehicle to the rear side of the front cowl is suppressed.

Conventionally, for example, in the case where the turn signal lights do not have the projections linearly provided, at the time of a left turn of the vehicle, when the vehicle body tilts to the left side, most of the travel wind travels from the right side of the vehicle to the rear side of the front cowl. In this case, a force of making the vehicle tilt to the left side is applied to the front cowl by the travel wind in addition to the force of the occupant, so that the occupant has to apply extra force, and there is room for improvement.

With respect to the point, in the present invention, the projection extends linearly in the vehicle height direction along the upper joint. Most of the travel wind which hits the front cowl is dispersed, and travel of the travel wind to the rear side of the front cowl is suppressed. When the amount of travel of the travel wind to the rear side of the front cowl decreases, the force of making the vehicle body tilt by the travel wind is suppressed. Consequently, the occupant does not have to apply an extra force at the time of a turn and can perform turn travel more comfortably.

In the invention of claim 4, the projection is provided with an inclined face inclined to the outside in the vehicle width direction. The upper joint is formed between the inclined face provided on the turn signal light side and the front upper cowl. A part of the travel wind which hits the front cowl is guided between the inclined face and the front upper cowl and flows along the inclined face. Since the projection is provided with the inclined face, the travel wind is easily taken to the inclined face.
Since the travel wind is easily taken to the inclined face, the flow aligning effect in the front cowl can be increased.

In the invention of claim 5, the upper joints are disposed in an almost V shape. A part of the travel wind which hits the front cowl is guided and flows so as to expand upward along the joints in an almost V shape. Therefore, the road holding of the vehicle can be further increased. When the road holding of the vehicle is increased, particularly, at the time of straight-ahead travel, stability of the vehicle can be further increased.

In the invention of claim 6,
, the duct is provided for the lower rim of the front upper cowl, and the wind discharging ports are provided for the upper end of the leg shield. The travel wind taken in the duct is discharged from the wind discharging port provided at the upper end of the leg shield. Consequently, the travel wind guided by the projection provided for the turn signal light and flowing upward can be guided to the rear side of the vehicle, and the flow of the travel wind can be made smooth.

In addition, since the projection is provided from the lower rim of the front upper cowl, the travel wind can be easily guided to the upward of the duct and the vehicle.

In the invention of claim 7, the regulation plate is provided on the inside of the duct, and the regulation plate has the vent hole permitting passage of the travel wind. The travel wind can be prevented from excessively entering the front cowl, and air resistance can be reduced.
Fig. 1 is a left side view of a motorcycle according to the present invention.
Fig. 2 is a left side view of a front portion of the motorcycle according to the present invention.
Fig. 3 is a diagram viewed from arrow 3 in Fig. 2.
Fig. 4 is a diagram viewed from arrow 4 in Fig. 2.
Fig. 5 is a cross section taken along line 5-5 of Fig. 3.
Fig. 6 is a cross section taken along line 6-6 of Fig. 3.
Fig. 7 is a cross section taken along line 7-7 of Fig. 3.
Fig. 8 is a cross section taken along line 8-8 of Fig. 3.
Fig. 9 is an exploded perspective view for explaining the structure of a front portion of a motorcycle according to the present invention.
Figs. 10 are diagrams for explaining operation of an embodiment and that of a comparative embodiment of the front portion of the motorcycle at the time of straight-ahead travel.
Fig. 11 is a diagram for explaining operation of a projection and a duct provided for a turn signal light according to the present invention.
Figs. 12 are diagrams for explaining operation of an embodiment and that of a comparative embodiment of a front portion of a motorcycle at the time of turn travel.

An embodiment of the present invention will be described in detail below. In the diagrams and embodiments, "up", "down", "front", "rear", "left", and "right" denote directions viewed from the driver of a motorcycle. The drawings are to be viewed in the directions of the reference numerals.

An embodiment of the present invention will be described on the basis of the drawings.

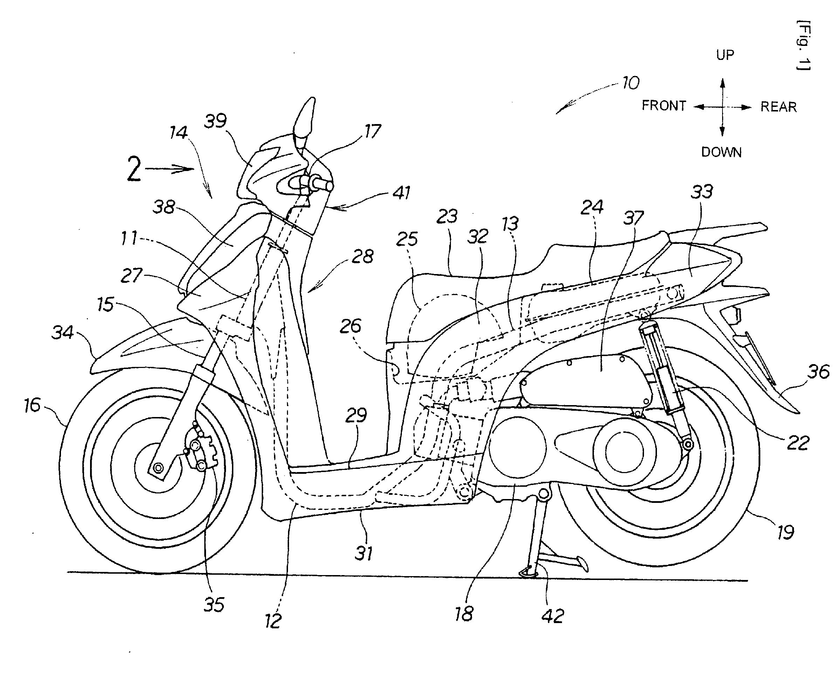

In Fig. 1, a motorcycle 10 as a vehicle is a low-floor vehicle in which a main frame 12 having an U shape in side view extends from a head pipe 11 and a seat rail 13 extends from the main frame 12, thereby constructing a body frame 14, a front fork 15 is swingably attached to the head pipe 11, a front wheel 16 is attached to the front fork 15, a handle pipe 17 is steerably attached to the head pipe 11 at an upper end of the front fork 15, a power unit 18 is attached to a rear part of the main frame 12 so as to be swingable in the vertical direction, a rear wheel 19 is attached to the power unit 18, a rear cushion 22 is interposed between the power unit 18 and the seat rail 13, a tandem seat 23 is mounted on the seat rail 13, a fuel tank 24 is disposed and a housing box 26 capable of housing a helmet 25 is disposed below the tandem seat 23, a part of the head pipe 11 and the main frame 12 is surrounded by a front cowl 27 and a leg shield 28, the remaining part of the main frame 12 is surrounded by a step 29 and an undercover 31, and the seat rail 13 is surrounded by a side cover 32 and a rear cover 33.

A front fender 34 as a mud guard is provided above the front wheel 16, a brake caliper 35 for applying braking force to the front wheel 16 is attached to the front fork 15, a rear fender 36 as a mud guard is provided obliquely upper rearward of the rear wheel 19, an air cleaner 37 is provided above the power unit 18, turn signal lights 38 are attached to the front cowl 27, a handle cover 41 covering the handle pipe 17 and turning integrally with the handle pipe 17 is provided above the front cowl 27, a head light 39 is attached to the handle cover 41, and a main stand 42 is attached to the power unit 18.

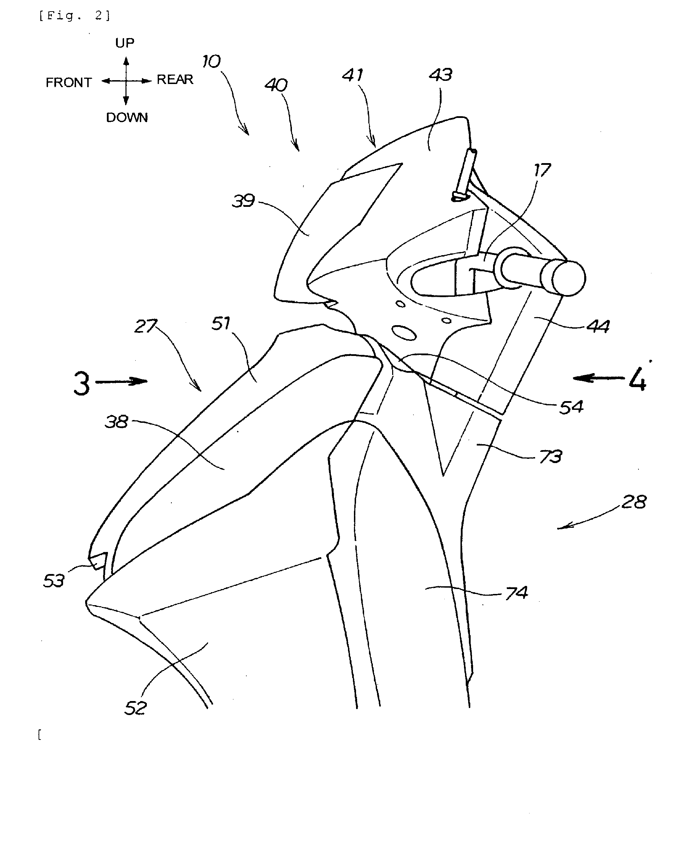

In Fig. 2, a front portion 40 of the motorcycle includes: the front cowl 27 covering the front of the vehicle; the leg shield 28 provided in a position facing the side of the tandem seat (reference numeral 23 in Fig. 1) on which an occupant sits, rearward of the front cowl 27; and the handle cover 41 provided above the front cowl 27 and covering the front of the handle pipe 17.

The front cowl 27 includes a front upper cowl 51 and a front lower cowl 52, and the turn signal lights 38 are disposed between the front upper cowl 51 and the front lower cowl 52.
A duct 53 taking travel wind is provided at a lower end of the front upper cowl 51, and a wind discharging port 54 for discharging the travel wind taken by the duct 53 is provided at an upper end of the leg shield 28 covering a rear portion of the front cowl 27.

The handle cover 41 has a handle cover front-half body 43 covering a front part of the handle pipe 17 steered by the driver and swinging integrally with the handle pipe 17, a handle cover rear-half body 44 butting with the handle cover front-half body 43 from the rear, covering a rear part of the handle pipe 17 and swinging integrally with the handle pipe 17, and the head light 39 provided in the handle cover front-half body 43.

Next, a state where the front cowl is seen from the front will be described.

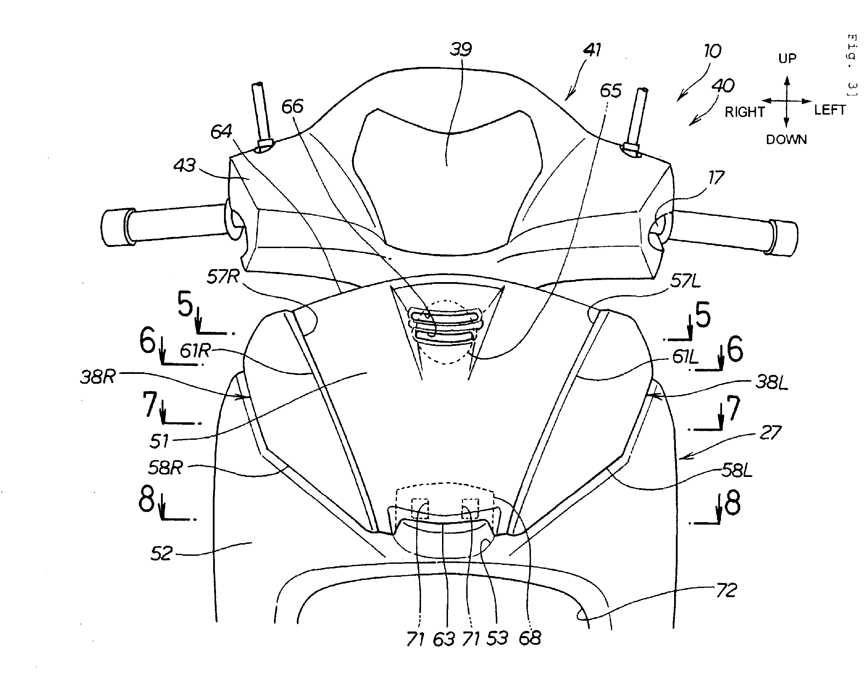

In Fig. 3, right and left turn signal lights 38R and 38L are disposed between the front upper cowl 51 and the front lower cowl 52 when the vehicle is viewed from the front.
A border part in which the front upper cowl 51 and the left turn signal light 38L are connected will be called a left upper joint 57L, and a border part in which the front lower cowl 52 and the left turn signal light 38L are connected will be called a left lower joint 58L. Similarly, a right upper joint 57R is provided between the front upper cowl 51 and the right turn signal light 38R, and a right lower joint 58R is provided between the front lower cowl 52 and the right turn signal light 38R.

The right and left upper joints 57R and 57L are disposed in an almost V shape. Along the upper joints 57R and 57L, projections 61R and 61L projected perpendicular to the drawing sheet are formed in the turn signal lights 38R and 38L, respectively.
The projections 61R and 61L extend from a lower end 63 of the front upper cowl to an upper end 64.
A horn opening 66 having a slit shape is provided in an upper part of the front upper cowl 51 and in front of a horn 65 for generating a horn.

The duct 53 for taking travel wind is provided in a center part of the lower end of the font upper cowl 51, a regulation plate 68 covering the duct 53 is provided for the front lower cowl 52, and vent holes 71 permitting passage of the travel wind taken in the duct 53 are provided in the regulation plate 68.
A fork opening 72 in which the front fork (reference numeral 15 in Fig. 1) is fit is provided in an upper part of the front lower cowl 52.

Although the duct is provided for the front upper cowl in the embodiment, it may be provided for the front lower cowl. Similarly, although the regulation plate is provided for the front lower cowl, it may be provided for the front upper cowl.

Next, a state where the front of the vehicle is seen from the driver's seat will be described.

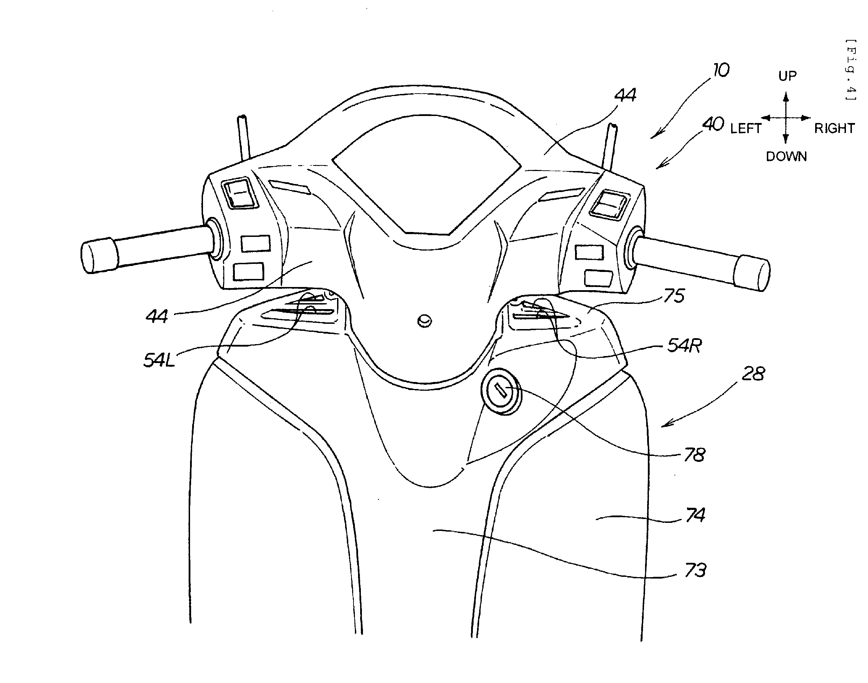

In Fig. 4, in the handle cover rear-half body 44, a meter unit including a speedometer and a travel distance integrator is attached. The leg shield 28 covering the front side of the legs of the occupant is made of an inner upper cover 73 and an inner lower cover 74 extending from the lower end of the inner upper cover 73.

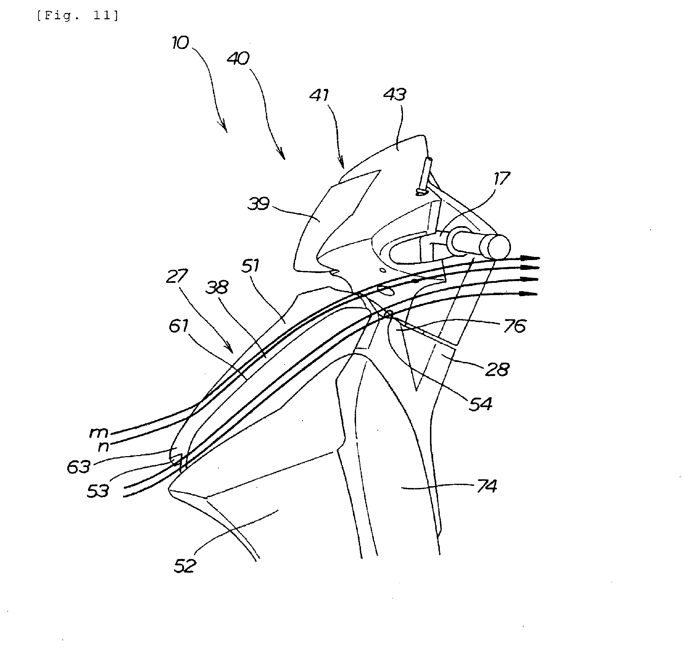

The leg shield 28 is disposed on the rear side of the front upper cowl (reference numeral 51 in Fig. 2) and the front lower cowl (reference numeral 52 in Fig. 2) and surrounds the head pipe (reference numeral 11 in Fig. 1) in cooperation with the front upper cowl 51 and the front lower cowl 52. With the configuration, the travel wind taken from the duct (reference numeral 53 in Fig. 2) to the inside of the front cowl (reference numeral 27 in Fig. 2) is output from wind discharging ports 54R and 54L opened in an upper end (reference numeral 75 in Fig. 11 which will be described later) of the inner upper cover. That is, in an upper end 76 of the leg shield covering the rear part of the front cowl 27, the wind discharging ports 54R and 54L for discharging the taken travel wind are provided. In the inner upper cover 73, a key cylinder 78 is disposed.

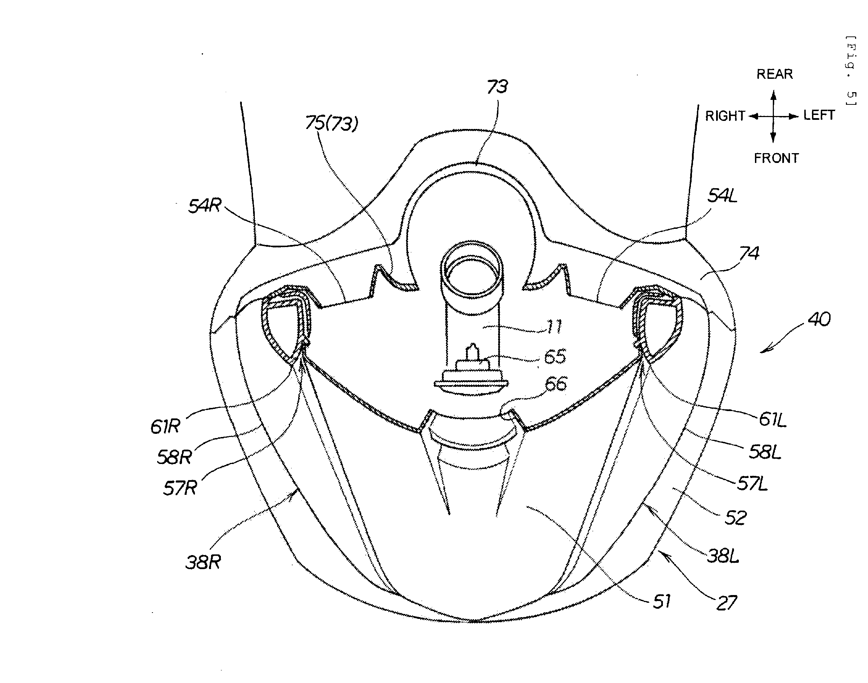

In the following, with reference to Figs. 5 to 8, the positional relations between the right and left turn signal lights 38R and 38L having the projections 61R and 61L along the upper joints 57R and 57L and the front upper cowl 51 to which the right and left turn signal lights 38R and 38L are attached, and the positional relations between the right and left turn signal lights 38R and 38L and the front lower cowl 52 will be described.

In Fig. 5, the projections 61R and 61L projected forward of the vehicle are provided for the turn signal lights 38R and 38L along the upper joints 57R and 57L to which the front upper cowl 51 and the turn signal lights 38R and 38L are connected, and the front upper cowl 51 is joined to the projections 61R and 61L.
In the lower joints 58R and 58L to which the front lower cowl 52 and the turn signal lights 38R and 38L are connected, the turn signal lights 38R and 38L and the front lower cowl 52 are joined so as to form an almost continuous plane.

The horn opening 66 is opened in the center in the vehicle width direction of the front upper cowl 51, and the horn 65 is disposed at the rear of the horn opening 66.
The horn 65 is disposed at the front of the head pipe 11 and at the rear of the front upper cowl 51.

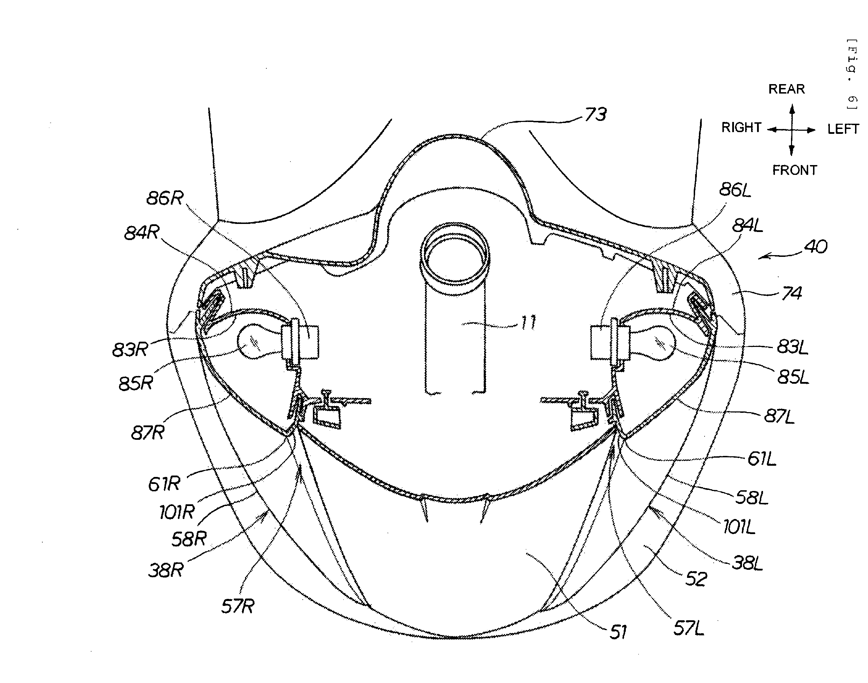

In Fig. 6, the right and left turn signal lights 38R and 38L include, as main components, shells 84R and 84L as case bodies having reflection planes 83R and 83L, lamp sockets 86R and 86L which are provided for the shells 84R and 84L and to which lamps 85R and 85L are attached, and front faces 87R and 87L formed by transparent members transmitting light of the lamps 85R and 85L, respectively.

The turn signal lights 38R and 38L are provided with the projections 61R and 61L projected forward of the vehicle along the upper joints 57R and 57L to which the front upper cowl 51 and the turn signal lights 38R and 38L are connected.
In the lower joints 58R and 58L to which the front lower cowl 52 and the turn signal lights 38R and 38L are connected, the turn signal lights 38R and 38L and the front lower cowl 52 are almost continuous.

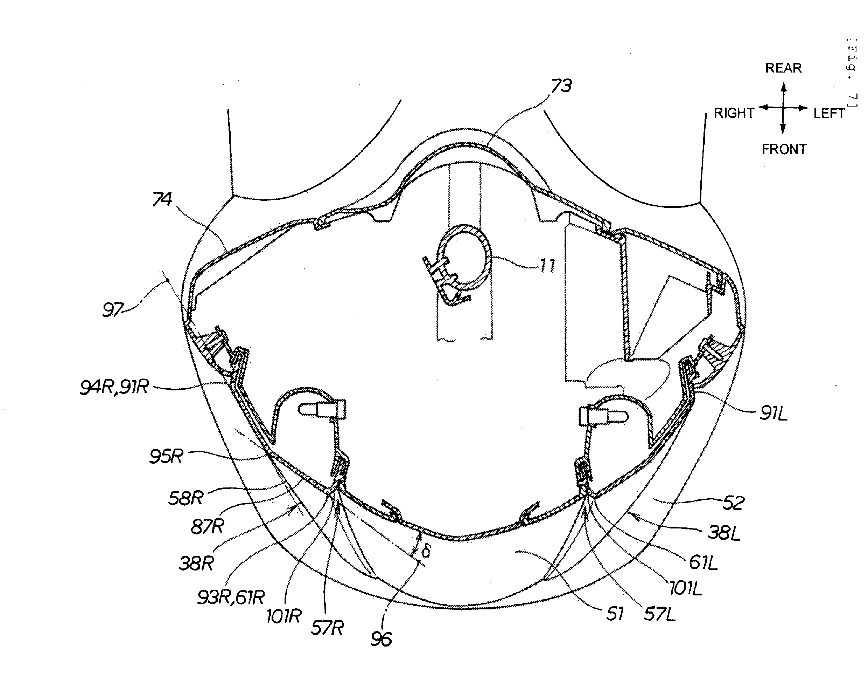

In Fig. 7, like in Fig. 6, the projection 61R projected forward of the vehicle is provided for the turn signal light 38R along the upper joint 57R to which the front upper cowl 51 and the turn signal light 38R are connected. In the lower joint 58R to which the front lower cowl 52 and the turn signal light 38R are connected, the turn signal light 38R and the front lower cowl 52 are almost continuous.

Specifically, the turn signal light 38R has the projection 61R projected forward of the vehicle from the upper joint 57R, a side face 91R exposed to the lower joint 58R, and the front face 87R curved outward of the vehicle from an upper end 93R of the projection to the upper end 94R of the side face. The projection 61R is formed so that a first virtual line 96 connecting a curve top 95R projected to the front face 87R and the upper end 93R of the projection is apart from the front upper cowl 51 only by a length (δ) and a second virtual line 97 connecting the curve top 95R and the upper end 94R of the side face crosses the front lower cowl 52.
Although the second virtual line 97 connecting the curve top 95R and the upper end 94R of the side face crosses the front lower cowl 52 in the embodiment, it may be disposed so as to be in contact with the front lower cowl 52.

The projection 61R is provided with an inclined surface 101R which is inclined toward the outside in the vehicle width direction. By the inclined surface 101R and the front upper cowl 51, the upper joint 57R is formed.
The travel wind flowing along the projection 61R is guided by the inclined surface 101R and is easily taken in the upper joint 57R. When the travel wind is easily taken to the upper joint 57R, the flow aligning effect can be increased in the front cowl 27.

Although the configuration and operation on the side of the turn signal light 38R disposed on the right side with respect to the center in the vehicle width direction have been described above, those on the side of the turn signal light 38L disposed on the left side are similar and, therefore, will not be described.

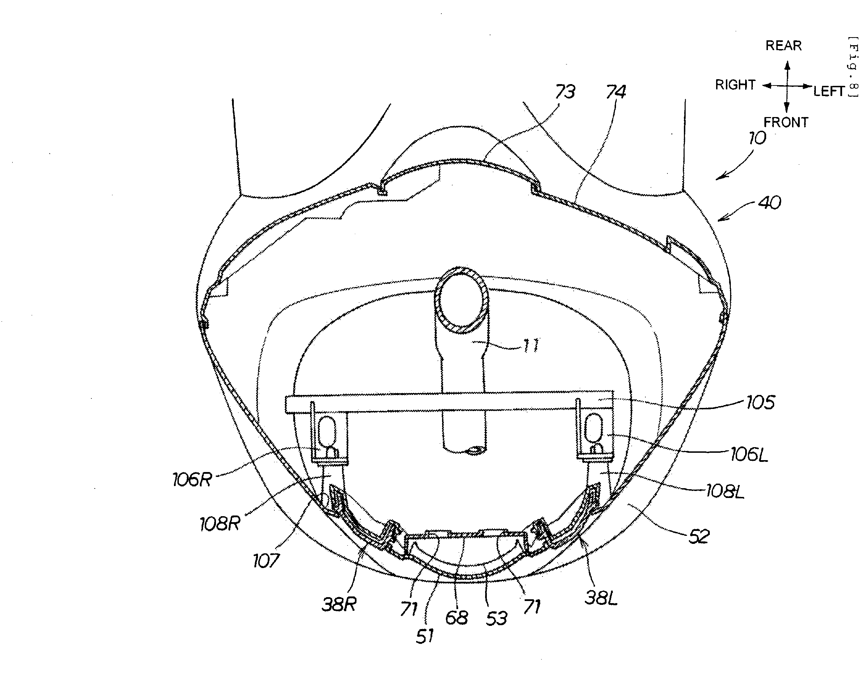

In Fig. 8, the duct 53 for taking the travel wind is provided for the front upper cowl 51. In the duct 53, the regulation plate 68 attached to the front lower cowl 52 as a component of the front cowl and closing the duct 53 is provided. The regulation plate 68 has the vent holes 71 and 71 permitting passage of the travel wind taken in the duct 53.

In the following, the attachment relation of the front lower cowl will be described.
A stay 105 is attached to the head pipe 11. The stay 105 extends laterally in the vehicle width direction. Right and left cowl stays 106R and 106L are extended from both ends of the stay 105 to the front of the vehicle. By attaching supporting parts 108R and 108L projected from a rear face 107 of the front lower cowl to the rear side of the vehicle to the right and left cowl stays 106R and 106L, respectively, the front lower cowl 52 is fixed to the side of the head pipe 11.

The regulation plate 68 is provided on the inside of the duct 53 and has the vent holes 71 and 71 permitting passage of the travel wind, so that the travel wind can be prevented from excessively entering the front cowl 27.

The attachment relation of components provided in the vehicle front part including the turn signal lights will now be described.

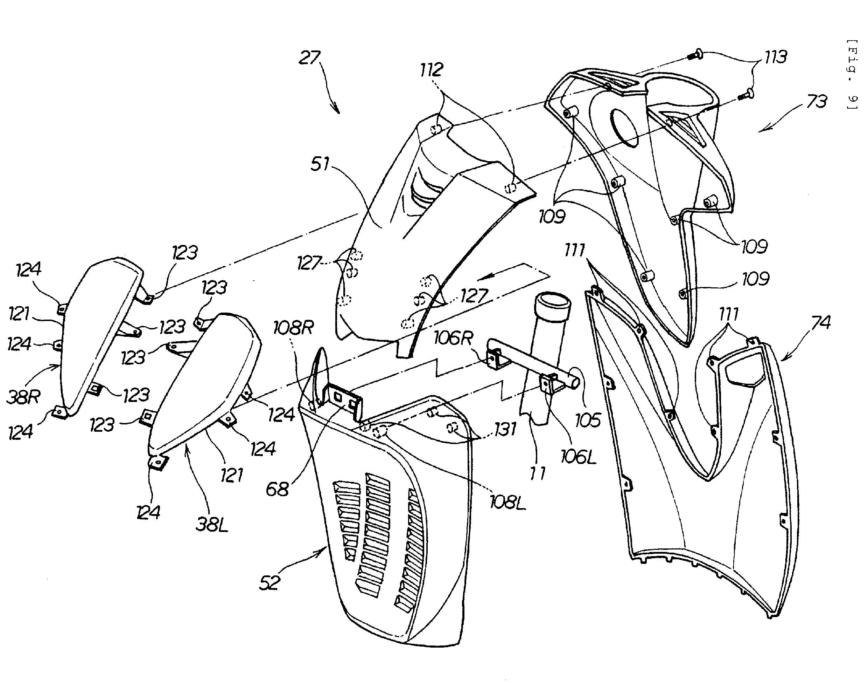

In Fig. 9, the inner upper cover 73 is fixed to the head pipe 11 via a not-shown stay member. A plurality of supporting parts 109 are provided for the inner upper cover 73, and six retaining parts 111 provided at the upper end of the inner lower cover are fixed to the supporting parts 109 via not-shown screws.

As described above, the front lower cowl 52 is attached to the cowl stays 106R and 106L provided on the side of the head pipe 11. The front upper cowl 51 disposed above the front lower cowl 52 is attached to the inner upper cover 73. Concretely, two bosses 112 are formed in the rear upper end of the front upper cowl 51, are in contact with the inner face of the upper end of the inner upper cover 73, and are attached to the inner upper cover 73 by screws 113 and 113 from the rear side of the vehicle.

Next, the attachment structure of the turn signal lights 38R and 38L will be described. The turn signal lights 38R and 38L are provided on the right and left sides, respectively, and the attachment structures on the right and left sides are similar to each other. In the following description, the attachment structure of the left turn signal light 38L will be described representatively, and that of the right turn signal light 38R will not be described.

In the turn signal light 38L, three inner stays 123 extend from a contour 121 to the inside of the vehicle, and three outer stays 124 extend from the contour 121 to the outside of the vehicle.
On the other hand, three inner supporting columns 127 are provided in positions corresponding to the three inner stays 123 on the face on the vehicle rear side of the front upper stay 105. The inner stays 123 are fixed to the inner supporting columns 127 via not-shown screw members. Similarly, three outer supporting columns 131 are provided in positions corresponding to the three outer stays 124 on the face on the vehicle rear side of the front lower stay 105. The outer stays 124 are fixed to the outer supporting columns 131 via not-shown screw members.

The operation of the above-described motorcycle will be stated.
Referring again to Fig. 3, in the upper joints 57R and 57L to which the front upper cowl 51 and the turn signal lights 38R and 38L are connected, the turn signal lights 38R and 38L are provided with the projections 61R and 61L projected forward of the vehicle. In the lower joints 58R and 58L to which the front lower cowl 52 and the turn signal lights 38R and 38L are connected, the turn signal lights 38R and 38L and the front lower cowl 52 are joined so as to form an almost continuous plane.

Since the turn signal lights 38R and 38L are projected in a part of the front cowl 27 as described above, the appearance around the front cowl can have an organized impression. The appearance around the front cowl can be increased.

Referring again to Fig. 7, more concrete description will be given.
The projection 61R is formed so that the first virtual line 96 connecting the curve top 95R projected to the front face 87R and the upper end 93R of the projection is apart from the front upper cowl 51 only by a length (δ).

In addition, the projection 61R is formed so that the second virtual line 97 connecting the curve top 95R and the upper end 94R of the side face is in contact with or crosses the front lower cowl 52. With the projection 61R, the turn signal light 38R does not project to the front lower cowl 52.

Since a part of the turn signal light 38R is projected from the front cowl 27 in such a manner, the appearance around the front cowl has an organized impression and can be improved.

The operation on the side of the turn signal light 38R disposed on the right side with respect to the center in the vehicle width direction has been described above. The operation on the side of the turn signal light 38L disposed on the left side is similar and, therefore, will not be described.

Next, the operation of the front portion of the vehicle body at the time of straight-ahead travel will be described.

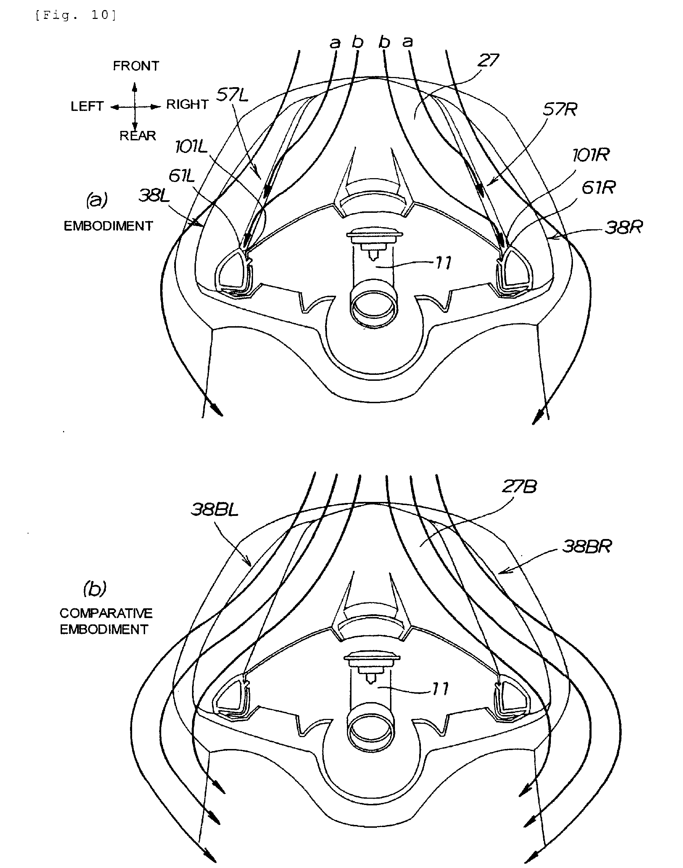

Fig. 10(a) shows an embodiment of the flows of travel wind passing through the front portion of the vehicle body at the time of straight-ahead travel.
Since the projections 61R and 61L extend straight in the vehicle height direction along the upper joints 57R and 57L, at the time of straight-ahead travel, a part of the travel wind is guided upward of the vehicle like the arrows "a" and "b" along the upper joints 57R and 57L. When a part of the travel wind is guided upward of the vehicle, a force of suppressing the front cowl 27 downward by the travel wind works. Consequently, floating of the front cowl 27 is suppressed, and the road holding of the vehicle can be increased.

Fig. 10(b) shows a comparative embodiment of the flows of travel wind passing through the front portion of the vehicle body at the time of straight-ahead travel. In the front portion of the vehicle body, the front cowl 27B and turn signal lights 38BR and 38BL are disposed almost flush with each other. The diagram shows the flows of travel wind passing through the front portion of the vehicle body in which no projections are provided for the turn signal lights 38BR and 38BL.
In this case, no projections are provided for the turn signal lights 38BR and 38BL. Consequently, the amount of the travel wind guided upward of the vehicle is smaller than that in the configuration of Fig. 10(a).

Referring again to Fig. 10(a), with respect to this point, in the present invention, the travel wind is guided and aligned by the inclined surfaces 101R and 101L provided for the turn signal lights 38R and 38L and inclined toward the outside of the vehicle width direction. Further, the travel wind passes between the inclined surfaces 101R and 101L and the front upper cowl 51 and flows upward along the inclined surfaces 101R and 101L. Since the inclined surfaces 101R and 101L are provided for the projections 61R and 61L in addition to the projections 61R and 61L, the travel wind flows more smoothly along the inclined surfaces 101R and 101L, and the flow aligning effect in the front cowl 27 can be increased.

Referring also to Fig. 3, the upper joints 57R and 57L are disposed in almost V shape. A part of the travel wind which hits the front cowl 27 is guided so as to expand upward along the upper joints 57R and 57L formed in the almost V shape and flows, so that the road holding of the vehicle can be further increased. When the road holding of the vehicle increases, stability in straight-ahead travel increases, and the vehicle maneuverability can be further increased.

The projections 61R and 61L extend from the lower end 63 to the upper end 64 of the front upper cowl. That is, the projections 61R and 61L are formed in a wide range in the height direction of the vehicle.

With respect to the point, in the present invention, the projections 61R and 61L extend from the lower end 63 to the upper end 64 of the front upper cowl, so that the flow aligning efficiency can be increased.

In Fig. 11, the projections 61 extend in the longitudinal direction of the vehicle and also extend linearly in the vehicle height direction along the upper joints 57R and 57L. Consequently, at the time of straight-ahead travel, the travel wind is guided upward of the vehicle, and the flow is aligned by the projections 61 projected forward of the vehicle. When the travel wind is guided upward of the vehicle as shown by arrows "m" and "n" and the flow is aligned, the force of pressing the front cowl 27 downward by the travel wind is generated. Therefore, floating of the front cowl 27 is suppressed, and the road holding of the vehicle can be increased.

In addition, the duct 53 is provided for the lower end 63 of the front upper cowl, and the wind discharging port 54 is provided for the upper end 76 of the leg shield. The travel wind taken from the duct 53 is discharged from the wind discharging port 54 provided for the upper end 76 of the leg shield. Therefore, the travel wind guided by the projections 61 provided for the turn signal lights 38 and flowed upward can be smoothly guided rearward of the vehicle without pulling the wind to the back side of the leg shield 28.

Further, the regulation plate (reference numeral 68 in Fig. 9) is provided in the duct 53 and has the vent holes (reference numeral 71 in Fig. 9) permitting passage of the travel wind, so that the travel wind can be prevented from excessively entering the front cowl.

Referring also to Fig. 7, the projection 61R is formed so that the first virtual line 96 connecting the curve top 95R projected to the front face 87R and the upper end 93R of the projection is apart from the front upper cowl 51 only by a length (δ), so that the projection height sufficiently high for guiding the travel wind and aligning the flows can be assured. When the sufficiently high projection height is assured, the action of suppressing floating of the front cowl 27 by the travel wind at the time of straight-ahead travel can be enhanced.

Next, the operation of the front portion of the vehicle body at the time of turn travel will be described.

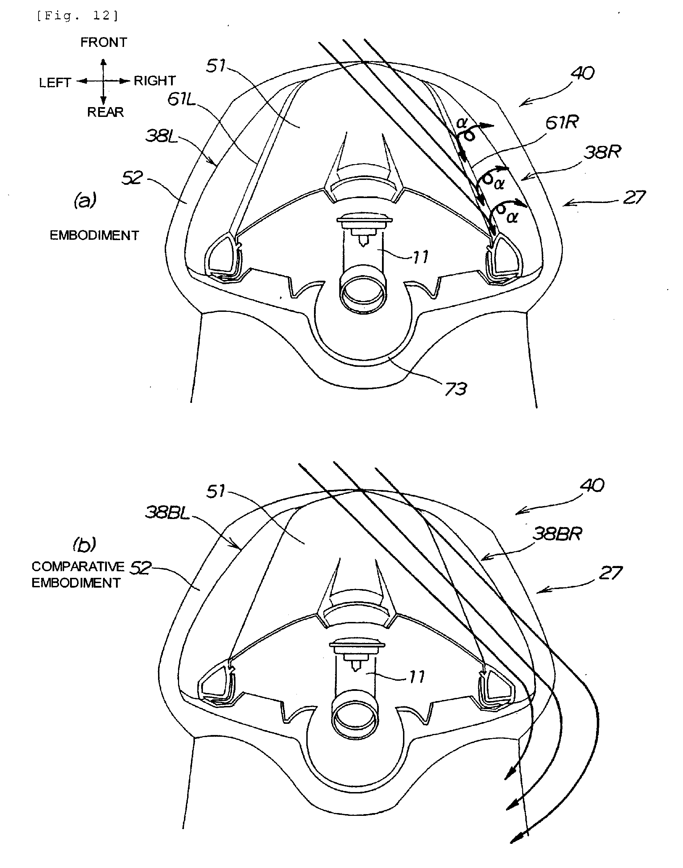

Fig. 12(a) shows an embodiment of the flows of travel wind passing through the front portion of the vehicle body at the time of left turn travel.
At the time of left turn, the travel wind is dispersed as shown by arrows a by the projection 61R provided linearly in the height direction of the turn signal light 38R, and travel of the travel wind from the side of the vehicle to the rear side of the front cowl 27 can be suppressed. When travel of the travel wind to the rear side of the front cowl 27 is suppressed, at the time of re-setting the vehicle body from a bank posture to an upright posture, the force applied by the occupant to the vehicle body decreases. Thus, the turning performance of the vehicle can be increased.

Fig. 12(b) shows a comparative embodiment of the flows of travel wind passing through the front portion of the vehicle body at the time of left turn travel. At the time of left turn of the vehicle, since there is no projection linearly provided for the turn signal light 38BR, when the vehicle tilts to the left side, most of the travel wind travels from the right side of the vehicle to the rear of the front cowl 27 while maintaining smooth flow and without being dispersed. In this case, to the front cowl 27, in addition to the force applied by the occupant, the force of tilting to the left side is applied by the travel wind. Therefore, an extra force is necessary at the time of a turn and there is room for improvement.

Referring again to Fig. 12(a), in the embodiment, the projection 61R extends linearly in the vehicle height direction along the upper joint. Therefore, most of the travel wind is dispersed by the projection 61R, and the amount of the travel wind to the rear side of the front cowl 27 decreases. When the amount of the travel wind to the rear side of the front cowl decreases, the force of tilting the vehicle body by the travel wind also decreases. Therefore, the turning operation becomes easier, and travel becomes more comfortable. At the time of resetting the vehicle body from the bank posture to the upright posture, the force applied by the occupant on the vehicle can be reduced.

That is, at the time of a left turn, the travel wind is dispersed by the projection 61R provided for the turn signal light 38R, and travel of the travel wind from the side of the vehicle to the rear side of the front cowl 27 can be suppressed. Thus, the turning performance of the vehicle can be improved.

At the time of a right turn, the projection 61L provided for the turn signal light 38L works in a manner similar to the above. Travel of the travel wind from the side of the vehicle to the rear side of the front cowl can be suppressed, and the turning performance of the vehicle can be increased.

Although the present invention is applied to a motorcycle in the embodiment, it can be also applied to a three-wheeled vehicle and may be applied to a general vehicle.

The present invention is suitable for a motorcycle in which turn signal lights are attached to a front cowl.
- 10:: motorcycle
- 27:: front cowl
- 28:: leg shield
- 38, 38L, 38R:: turn signal lights
- 51:: front upper cowl
- 52:: front lower cowl
- 53:: duct
- 54, 54L, 54R:: wind discharging ports
- 57L, 57R:: upper joints
- 58L, 58R:: lower joints
- 61, 61L, 61R:: projections
- 63:: lower end of front upper cowl
- 64:: upper end of front upper cowl
- 68:: regulation plate
- 71:: vent hole
- 76:: upper end of leg shield
- 87L, 87R:: front faces
- 91L, 91R:: side faces
- 93L, 93R:: upper ends of projections
- 94L, 94R:: upper ends of side faces
- 95L, 95R:: curve tops
- 96:: first virtual line
- 97:: second virtual line
- 101L, 101R:: inclined surfaces

## Claims

1. A motorcycle whose front part is covered with a front cowl (27) including a front upper cowl (51) and a front lower cowl (52), a pair of right and left turn signal lights (38R, 38L) being attached to the front cowl (27),
the right and left turn signal lights (38R, 38L) being disposed between the front upper cowl (51) and the front lower cowl (52) when the vehicle is viewed from the front;
projections (61R, 61L) projected forward of the vehicle are provided for the turn signal lights (38R, 38L) in upper joints (57R, 57L) in which the front upper cowl (51) and the turn signal lights (38R, 38L) are connected, the front upper cowl (51) is joined to the projections (61R, 61L); and
the front upper cowl (51) has a lower rim (63), an upper rim (64) and two side rims at the upper joints (57R, 57L),
**characterized in that**
the turn signal lights (38R, 38L) and the front lower cowl (52) are joined so as to form an almost continuous plane in lower joints (58R, 58L) in which the front lower cowl (52) and the turn signal lights (38R, 38L) are connected; and
the projections (61R, 61L) extend from a lower rim (63) to an upper rim (64) of the front upper cowl.

2. The motorcycle according to claim 1, wherein:
the turn signal lights (38R, 38L) have projections (61R, 61L) projected from the upper joints (57R, 57L) to the front of the vehicle, side faces (91R, 91L) exposed in the lower joints (58R, 58L), and front faces (87R, 87L) curved from the upper ends (93R, 93L) of the projections to the upper ends (94R, 94L) of the side faces; and
the projection (61R, 61L) is formed so that a first virtual line (96) connecting a curve top (95R, 95L) projected to the front face (87R, 87L) and the upper end (93R, 93L) of the projection is apart from the front upper cowl (51) and a second virtual line (97) connecting the curve top (95R, 95L) and the upper end (93R, 93L) of the side face is in contact with or crosses the front lower cowl (52).

3. The motorcycle according to claim 1 or 2, wherein
the projections (61R, 61L) extend linearly in a vehicle height direction along the upper joints (57R, 57L).

4. The motorcycle according to claim 1, 2, or 3, wherein
inclined faces (101R, 101L) inclined to the outside in the vehicle width direction with distance from the upper joints (57R, 57L) are provided for the projections (61R, 61L).

5. The motorcycle according to any one of claims 1 to 4, wherein
the right and left upper joints (57R, 57L) are disposed in an almost V shape when the vehicle is viewed from the front.

6. The motorcycle according to any of claims 1 to 5, wherein:
a duct (53) for taking travel wind is provided for the lower rim (63) of the front upper cowl (51); and
wind discharging ports (54R, 54L) for discharging the taken travel wind are provided for an upper end (76) of a leg shield covering a rear part of the front cowl (27).

7. The motorcycle according to claim 6, wherein
a regulation plate (68) attached to the front cowl (27) and closing the duct (53) is provided on the inside of the duct (53), and the regulation plate (68) has a vent hole (71) permitting passage of the travel wind taken in the duct (53).

## Patentansprüche

1. Motorrad, dessen vorderer Teil von einer Frontverkleidung (27) abgedeckt ist, die eine obere Frontverkleidung (51) und eine untere Frontverkleidung (52) umfasst, ein Paar rechter und linker Blinklichter (38R, 38L), die an der Frontverkleidung (27) befestigt sind,
wobei das rechte und das linke Blinklicht (38R, 38L) zwischen der oberen Frontverkleidung (51) und der unteren Frontverkleidung (52) angeordnet sind, wenn das Fahrzeug von der Vorderseite betrachtet wird;
Vorsprünge (61 R, 61 L), die nach vorne von dem Fahrzeug aus vorstehen, die für die Blinklichter (38R, 38L) an oberen Übergängen (57R, 57L) vorgesehen sind, an denen die obere Frontverkleidung (51) und die Blinklichter (38R, 38L) miteinander verbunden sind, wobei die obere Frontverkleidung (51) mit den Vorsprüngen (61 R, 61 L) verbunden ist; und
die obere Frontverkleidung (51) eine untere Kante (63), eine obere Kante (64) und zwei Seitenkanten an den oberen Verbindungen (57R, 57L) hat,
**dadurch gekennzeichnet, dass**
die Blinklichter (38R, 38L) und die untere Frontverkleidung (52) so verbunden sind, dass sie eine nahezu kontinuierliche Ebene an den unteren Verbindungen (58R, 58L) bilden, an denen die untere Frontverkleidung (52) und die Blinklichter (38R, 38L) verbunden sind; und
die Vorsprünge (61R, 61L) sich von der unteren Kante (63) zu der oberen Kante (64) der oberen Frontverkleidung erstrecken.

2. Motorrad gemäß Anspruch 1, wobei:
die Blinklichter (38R, 38L) Vorsprünge (61R, 61L) haben, die von den unteren Verbindungen (57R, 57L) zur Front des Fahrzeugs hervorstehen, Seitenflächen (61R, 61L), die an den unteren Verbindungen (58R, 58L) freiliegen, und Frontflächen (37R, 37L), die von den oberen Enden (93R, 93L) der Vorsprünge zu den oberen Enden (94R, 94L) der Seitenflächen gekrümmt sind; und
der Vorsprung (61 R, 61 L) so geformt ist, dass eine erste gedachte Linie (96), die einen obersten Kurvenpunkt (95R, 95L), der von der Frontfläche (37R, 37L) vorsteht, und das obere Ende (93R, 93L) des Vorsprungs verbindet, getrennt von der oberen Frontverkleidung (51) ist und eine zweite gedachte Linie (97), die den obersten Kurvenpunkt (95R, 95L) und das obere Ende (93R, 93L) der Seitenfläche verbindet, in Kontakt mit der unteren Frontverkleidung (52) ist oder diese kreuzt.

3. Motorrad gemäß Anspruch 1 oder 2, wobei
die Vorsprünge (61 R, 61 L) sich geradlinig in einer Fahrzeughöhenrichtung entlang der oberen Verbindungen (57R, 57L) erstecken.

4. Motorrad gemäß Anspruch 1, 2 oder 3, wobei
geneigte Flächen (101R, 101L) in der Fahrzeugbreitenrichtung zur Außenseite hin geneigt sind, mit einem Abstand von den oberen Verbindungen (57R, 57L) und für die Vorsprünge (61 R, 61 L) vorgesehen sind.

5. Motorrad gemäß einem der Ansprüche 1 bis 4, wobei
die linken und rechten oberen Verbindungen (57R, 57L) annähernd in einer V-Form angeordnet sind, wenn das Fahrzeug von der Front aus betrachtet wird.

6. Motorrad gemäß einem der Ansprüche 1 bis 5, wobei:
ein Kanal (53) zum Einlassen von Fahrtwind an der unteren Kante (63) der oberen Frontverkleidung (51) vorgesehen ist; und
Windauslassöffnungen (64R, 64L) zum Auslassen des eingelassenen Fahrtwinds an einem oberen Ende (76) eines Beinschilds vorgesehen sind, das einen hinteren Teil der Frontverkleidung (27) abdeckt.

7. Motorrad gemäß Anspruch 6, wobei
eine Regelscheibe, die an der Frontverkleidung (27) angebracht ist und den Kanal (53) verschließt, an der Innenseite des Kanals (53) vorgesehen ist und die Regelscheibe (68) ein Entlüftungsloch (71) hat, das ein Hindurchtreten von Fahrtwind, der in den Kanal (53) eingelassen ist, erlaubt.

## Revendications

1. Motocycle dont la partie avant est couverte d'un capot avant (27) comprenant un capot supérieur avant (51) et un capot inférieur avant (52), deux feux clignotants droit et gauche (38R, 38L) qui sont fixés au capot avant (27),
les feux clignotants droit et gauche (38R, 38L) étant disposés entre le capot supérieur avant (51) et le capot inférieur avant (52) lorsque le véhicule est vu de l'avant ;
des saillies (61R, 61L) faisant saillie vers l'avant du véhicule sont prévues pour les feux clignotants (38R, 38L) dans des joints supérieurs (57R, 57L) dans lesquels le capot supérieur avant (51) et les feux clignotants (38R, 38L) sont raccordés, le capot supérieur avant (51) est assemblé aux saillies (61R, 61L) ; et
le capot supérieur avant (51) a un bord inférieur (63), un bord supérieur (64) et deux bords latéraux sur les joints supérieurs (57R, 57L),
**caractérisé en ce que** les feux clignotants (38R, 38L) et le capot inférieur avant (52) sont assemblés de manière à former un plan presque continu dans les joints inférieurs (58R, 58L) dans lesquels le capot inférieur avant (52) et les feux clignotants (38R, 38L) sont raccordés ; et
les saillies (61R, 61L) s'étendent d'une bordure inférieure (63) à une bordure supérieure (64) du capot supérieur avant.

2. Motocycle selon la revendication 1, dans lequel :
les feux clignotants (38R, 38L) ont des saillies (61R, 61L) faisant saillie des joints supérieurs (57R, 57L) à l'avant du véhicule, des faces latérales (91R, 91L) exposées dans les joints inférieurs (58R, 58L), et des faces avant (87R, 87L) recourbées depuis les extrémités supérieures (93R, 93L) des saillies aux extrémités supérieures (94R, 94L) des faces latérales ; et
la saillie (61R, 61L) est formée de sorte qu'une première ligne virtuelle (96) raccordant une partie supérieure courbe (95R, 95L) faisant saillie vers la face avant (87R, 87L) et l'extrémité supérieure (93R, 93L) de la saillie est séparée du capot supérieur avant (51) et une deuxième ligne virtuelle (97) raccordant la partie supérieure courbe (95R, 95L) et l'extrémité supérieure (93R, 93L) de la face latérale est en contact avec ou croise le capot inférieur avant (52).

3. Motocycle selon la revendication 1 ou 2, dans lequel
les saillies (61R, 61L) s'étendent linéairement dans un sens de hauteur de véhicule le long des joints supérieurs (57R, 57L).

4. Motocycle selon la revendication 1, 2, ou 3, dans lequel
des faces inclinées (101R, 101L) inclinées vers l'extérieur dans le sens de largeur du véhicule à distance des joints supérieurs (57R, 57L) sont prévues pour les saillies (61R, 61L).

5. Motocycle selon l'une quelconque des revendications 1 à 4, dans lequel
les joints supérieurs droit et gauche (57R, 57L) sont disposés en une forme presque en V lorsque le véhicule est vu de l'avant.

6. Motocycle selon l'une des revendications 1 à 5, dans lequel :
un conduit (53) pour prendre du vent du déplacement est prévu pour le bord inférieur (63) du capot supérieur avant (51) ; et
des orifices de décharge du vent (54R, 54L) pour décharger le vent du déplacement pris sont prévus pour une extrémité supérieure (76) d'une protection de jambe couvrant une partie arrière du capot avant (27).

7. Motocycle selon la revendication 6, dans lequel
une plaque de maintien (68) fixée au capot avant (27) et fermant le conduit (53) est prévue sur l'intérieur du conduit (53), et la plaque de maintien (68) a un évent (71) permettant le passage du vent du déplacement pris dans le conduit (53).
